# EUROPEAN PATENT SPECIFICATION

(11) **EP 4 551 900 B1**
(45) Date of publication and mention of the grant of the patent: **10.06.2026**
(21) Application number: 22773484.5
(22) Date of filing: 05.09.2022
(51) Int. Cl.: G01B 11/24

(54) **SYSTEM AND METHOD FOR THREE DIMENSIONAL SCANNING OF AN OBJECT**
SYSTEM UND VERFAHREN ZUR DREIDIMENSIONALEN ABTASTUNG EINES OBJEKTS
SYSTÈME ET PROCÉDÉ DE BALAYAGE TRIDIMENSIONNEL D'UN OBJET

(43) Date of publication of application: 14.05.2025
(73) Proprietor: Siemens Aktiengesellschaft, 80333 München (DE)
(72) Inventor: ENGEL, Thomas, 73432 Aalen (DE)
(74) Representative: Siemens Patent Attorneys
(86) International application number: PCT/EP2022/074649
(87) International publication number: WO 2024/051917

(56) References cited:
- US-A1- 2014 368 726
- US-A1- 2020 099 921
- US-B2- 10 659 764

## Description

The invention relates to camera based scanning of an object in three dimensions.

Three dimensional (3D) measurements with a single camera from a fixed viewing direction are useful for measuring the 3D shape of objects in various applications like computer vision and robotics wherein speed and versatility are key elements for measurements in the context of tasks like inspection and detection.

3D measurements of a scene typically apply any kind of stereoscopic imaging principle. One known stereoscopic imaging principle involves two cameras looking at the scene from different viewing directions, wherein the two cameras can be either two physical cameras at different poses imaging at the same time or one camera positioned at different poses at different instants of time. However, the principle is less suited for moving objects. Another approach applies an active triangulation system with one camera and a structured illumination onto the scene instead of using two cameras. The system takes a series of images with different illumination patterns in order to evaluate the depth information from the stack of images. For example, US10659764B2 discloses an approach for measuring the 3D shape of an object which involves projecting and moving a light pattern over the object and imaging the illuminated object with an event based or "DVS" camera. The 3D shape of the object is determined based on the event signals from the camera recorded during the swipe of the object with the light pattern.

Another way to capture depth information is to use image stacks created by one camera or imaging system by taking images at different nominal focus positions and by evaluating the intensity variation for each pixel or binned region in the image for maximum or minimum intensity reading depending on momentary defocus. The extremal intensity may be assigned to the physical position of the real object surface point in 3D space. Taking focus series takes quite some time, since the number of images in the stack depends on spatial separation and depth range to be covered. Therefore, this principle is also less suited for moving objects due to its high time requirements. Additionally, the measurement generates a relatively high amount of data to be processed.

Other 3D measuring principles like chromatic (confocal) sensing or laser triangulation probes suffer from the fact that they are not capable to capture an object height info for an area of interest in parallel. Scanning in one or even two directions would be required and thus make these technologies less suited for many applications.

Therefore, a solution is required which allows fast and precise scanning of an object in three dimensions. This is solved by the method suggested in claim 1 and by the scanning system as per claim 15.

A method SCMETH for camera based determination of a position of a feature of an object relative to a reference position of the camera, e.g. a surface of a sensor chip of the camera, assumes that the object is positioned in a field of view of the camera which extends from the camera in a z-direction. The camera applied in the method is DVS camera comprising a sensor chip with a plurality of sensor elements SE(j), i.e. pixels, with i=1,...,I and I representing the total number of sensor elements of the sensor chip. The camera is configured to generate for each sensor element SE(j) individually, i.e. pixel wise, imaging data DAT(j) including an event signal SIG(j). Each event signal is selected from a predefined group GRP of event signal types, which group GRP can include at least a positive event and a negative event. An event signal is generated only in case a light flux or light intensity, respectively, onto the respective sensor element SE(j) changes by more than a given threshold THRES, e.g. 15%, while no event signal is generated in case the flux change is less than the threshold THRES. The method SCMETH comprises a stage SCAN of scanning, during which a focal length f(t) of an optics section of the DVS camera is varied in the z-direction according to a predefined pattern f(t) in time. Thus, it can be assumed that the momentarily applied focal length f(t) as well as object distance g(t) and image distance b(t), e.g. according to the lens maker equation 1/f=1/g+1/b, are well known for each point t in time in a variation range between a minimum value fmin and a maximum value fmax. Moreover, the method comprises a stage EVAL of evaluation, during which any one or more imaging data DAT(j) generated by the DVS camera during the focal length variation of the stage SCAN are evaluated to determine at least a z-position d201 of the feature in the z-direction.

Thus, the special properties of a DVS camera as introduced below are beneficially applied to determine at least the z-position of the feature of interest.

Each imaging data DAT(j) transferred from the DVS camera to the evaluation system for further processing in the evaluation stage EVAL includes the generated event signal SIG(j) itself, being either positive POS or negative NEG, an accurate time stamp TS(j) which represents the point t in time at which the sensor element SE(j) generated the respective event signal SIG(j), and an unambiguous identifier ID(j) of the respective individual event signal SIG(j) generating sensor element SE(j), representing the position of the respective sensor element SE(j) on the sensor chip of the DVS camera.

The z-position d201 to be determined for the feature is determined based on the momentary focal length f(t0) and/or related g(t0) and/or b(t0) according to a point t0 in time. The point t0 in time is selected to be representing a point in time during the focal length variation at which a temporal and/or spatial pattern of one or more event signal SIG(j) generating sensor elements SE(j) fulfills a predefined condition or corresponds to a predefined pattern, respectively.

Therein, the "temporal and/or spatial pattern" of event signal SIG(j) generating sensor elements SE(j) might, in the simplest case, prescribe that one of the sensor elements SE(j) has to generate an event signal at some point t0 in time: In that case, the predefined condition is assumed to be met in case an event signal SIG(j) of any event signal type, e.g. a positive event POS or a negative event NEG, is generated at a point tp in time, wherein t0 is selected to be identical to the point tp in time, i.e. t0=tp.

In a more elaborate case, the pattern might be a temporal pattern which might consider the same sensor element SE(j) over time and the temporal development of even signals SIG(j) generated by that sensor element SE(j) is observed. A spatial pattern might consider different sensor elements SE(j1), SE(j2) and the event signals SIG(j1), SIG(j2) generated by them are observed. A mixed pattern which is both a spatial and a temporal pattern might consider different sensor elements SE(j1), SE(j2) over time t.

In a more complex scenario, the predefined condition is assumed to be met in case, for a first one of the sensor elements SE(j), a first sequence SEQ(j) comprising one or more event signals SIG(j) of a first event signal type, e.g. a positive event POS, is generated between points t1 and t2 in time with t2≥t1 and, for a sensor element SE(j') of the plurality of sensor elements SE(j) which is unambiguously related, i.e. in a given neighborhood, to the first sensor element SE(j), a second sequence SEQ(j') comprising one or more event signals SIG(j') of a second event signal type, e.g. a negative event NEG, is generated between points t3 and t4 in time with t4≥t3 and t3>t2,
wherein t0 is selected to be in the range t2<t0<t3, especially t0=(t2+t3)/2. This shall include the situation with one or both of the sequences SEQ including only one event signal.

A sensor element SE(j') "unambiguously related" to the first sensor element SE(j) might be identical to the first sensor element SE(j), i.e. SE(j')=SE(j). Due to an effect which will be explained below exemplarily in the context of the "first effect" in the first mode of operation, the expression "unambiguously related" also applies to sensor elements SE(j), SE(j') which are not identical, but away from another by a limited, predefinable distance DIST.

In short, sensor elements SE(j), SE(j') are unambiguously related to each other in case both sensor elements are located on the sensor chip within the predefinable distance DIST from each other, wherein the predefined distance DIST is determined based on the speed of change of the focal length f(t) during the focal length variation.

It is possible that the projection of a feature is not limited to only one sensor element but it might extend across an area on the sensor chip which covers a plurality of sensor elements. In such a scenario, the predefined condition might be assumed to be met in case, for one or more sensor elements SE within a first area on the sensor chip, first event signals SIG(j) of a first event signal type, e.g. a positive event POS, are generated between points t1 and t2 in time with t2≥t1, and, for one or more sensor elements SE within a second area on the sensor chip unambiguously related, i.e. in a given neighborhood, to the first area, second event signals SIG(j') of a second event signal type, e.g. a negative event NEG, are generated between points t3 and t4 in time with t4≥t3 and t3>t2, wherein t0 is selected to be in the range t2<t0<t3, especially t0=(t2+t3)/2.

For example, the first area and the second area are unambiguously related to each other in case they overlap or they are adjacent to each other, i.e. at least one sensor element of the first area is adjacent to at least one sensor element of the second area. "Adjacent" means that essentially no further sensor element lies between those "adjacent" sensor elements.

The z-position d201 of the feature can be determined to be the distance of the momentary focal point of the optics section from a surface of the sensor chip at the determined point t0 in time, wherein the momentary distance of the focal point is derived from the momentary focal length f(t0) according to the selected point t0 in time. With the optics section and its properties being well known, including their behavior over time due to the focal length variation f(t) and related b(t) and g(t), the distance d201 can be calculated to be d201=b(t0)+g(t0).

In a first mode of operation, the optics section is configured to execute the focal length variation according to the predefined pattern f(t) in time such that its focal length is varied while its focus position and focal plane, respectively, moves in the z-direction due to the focal length variation. such that a sharpness of a projection of a given feature onto the sensor chip varies during the focal length variation.

In a second mode of operation, the optics section is configured to execute the focal length variation according to the predefined pattern f(t) in time such that its focal length is varied while its focus position and focal plane and, respectively, does not move in the z-direction but stays constant at a selected position in the z-direction, .e.g. in a predefined distance from main plane, such that a sharpness of a projection of a feature at the selected position in the z-direction onto the sensor chip remains constant during the focal length variation while the magnification of the projection varies with the focal length variation.

In the second mode of operation, the stage SCAN can be executed multiple times, wherein different constant focus positions in the z-direction are selected for different executions of the stage SCAN. Furthermore, for each execution of the stage SCAN, positions POS(j,t) of those sensor elements SE(j) on the sensor chip might be observed over time t, which successively generate event signals SIG(j) during focal length variation corresponding to a projection of the feature onto the sensor chip, to determine a lateral propagation speed VEL(POS(j,t),t) of the projection of the feature across the sensor chip due to the focal length variation, wherein a representation of the z-position d201 to be determined for the feature (201) is estimated based on the lateral propagation speed VEL(POS(j,t),t).

In addition to the z-position d201, a lateral position x201, y201 of the feature 201 in x- and y-direction is derived from the position POS(j) of the event signal SIG(j) generating sensor element SE(j) on the sensor chip 111, wherein the position POS(j) is derived from the identifier ID(j) of the respective individual event signal SIG(j) generating sensor element SE(j).

A corresponding scanning system for camera based determination of a position of a feature of an object relative to a reference position of the camera, e.g. a surface of a sensor chip of the camera, comprises a DVS camera which has a field of view for scanning the object which extends from the camera in a z-direction. The DVS camera, which comprises a sensor chip with a plurality of sensor elements SE(j), is configured to generate for each sensor element SE(j) individually imaging data DAT(j) including an event signal SIG(j) from a group GRP of event signal types in case a light flux onto the respective sensor element SE(j) changes by more than a given threshold THRES. The scanning system comprises an evaluation system which is configured to control the optics section of the DVS camera for variation of the focal length and to receive and evaluate the imaging data DAT(j) for determination of the position. Especially, the evaluation system is configured to execute a method as described above.

The invention advantageously implements a camera applying the "Dynamic Vision System" (DVS) principle. Typically, such a DVS camera, also known as "event camera" or "neuromorphic camera", is a full field camera with a sensor chip of aspect ratio 4:3 or 16:9 or the like, currently being available in versions with >10⁶ individual sensor elements (e.g. Prophesee's "Metavision" sensor with a Sony chip). The essential properties of a DVS camera applied in the solution described herein include that the DVS camera detects events, i.e. changes of light flux or intensity, respectively, exceeding a pre-defined threshold value THRES of e.g. 15%, and that the light flux is detected pixelwise with a given threshold THRES, so that in effect the DVS camera has an effective dynamic range of 120dB or even higher, as a result of the sensor elements' full well capacity and adoptions of exposure time according to the minimum and maximum allowable values. The high dynamics of signals for an event on a sensor element being significantly faster than a typical camera frame readout time and the high dynamic range of the camera and/or sensing principle are core aspects of the favorable solution provided herein. The signal rate of events can be in the range down to single micro-seconds while typical frame rates of Mpxl cameras are nowadays in the range of 10 to 5ms for 100 or 200Hz frame rates, respectively. Thus, the speed of the measuring system is increased by 3 to 4 orders of magnitude with respect to today's technology.

In summary, major differences of the DVS camera based 3D scanning over conventional systems are based on the properties of a DVS camera as described below to detect events instead of full frame imaging, the significantly higher speed for DVS camera data acquisition compared to typical frame rates of full frame cameras, a close and precise coupling of the timing is not needed in that accuracy for conventional camera, since the DVS camera is much faster, the significant reduction in data volume, since only relevant events get reported instead of a full image capture of the total surface of the object under inspection.

The suggested system can measure very fast and precise, where the lateral and depth resolution can be controlled mainly by the parameters of the optics section and the operations parameters of the system. Therein, the application of an event based or DVS camera for precise 3D measurements benefits from very high dynamics of the DVS camera which allows to continuously change the effective focal length f(t) of the optics section very fast and still take the relevant changes in the projections to generate a precise 3D view of the scene. The object's 3D-topography is reconstructed out of the event signals SIG(j) based on a sensor element SE(j) based maximum or minimum peak detection on the respective intensity including fitting capability, an edge point or a contour line by a sequence of neighboring positive POS and negative events NEG on the sides of the contour line, and sub-pixel lateral resolution by lateral evaluation of positive or negative events while defocusing a respective structure.

It is to be understood that the elements and features recited in the appended claims may be combined in different ways to produce new claims that likewise fall within the scope of the present invention. Thus, whereas the dependent claims appended below depend from specific independent or dependent claims, it is to be understood that these dependent claims can, alternatively, be made to depend in the alternative from any preceding or following claim, whether independent or dependent, and that such new combinations are to be understood as forming a part of the present specification.

### DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:
- FIG 1: shows a scanning system for 3D scanning of an object,
- FIG 2: shows a flow chart of the scanning method SCMETH,
- FIG 3: shows a top view on a sensor chip of a DVS camera,
- FIG 4a: shows a blurred projection onto a sensor chip at a first point in time,
- FIG 4b: shows a blurred projection onto a sensor chip at a second point in time,
- FIG 5a: shows a sharp projection onto a sensor chip at a first point in time,
- FIG 5b: shows a sharp projection onto a sensor chip at a second point in time,
- FIG 6: shows a diagram illustrating the development of light flux FX depending on focal length f(t),
- FIG 7: shows a diagram illustrating change in light flux depending on focal length f(t) and related event signals,
- FIG 8: shoes a top view on a section of the sensor chip.

### DETAILED DESCRIPTION

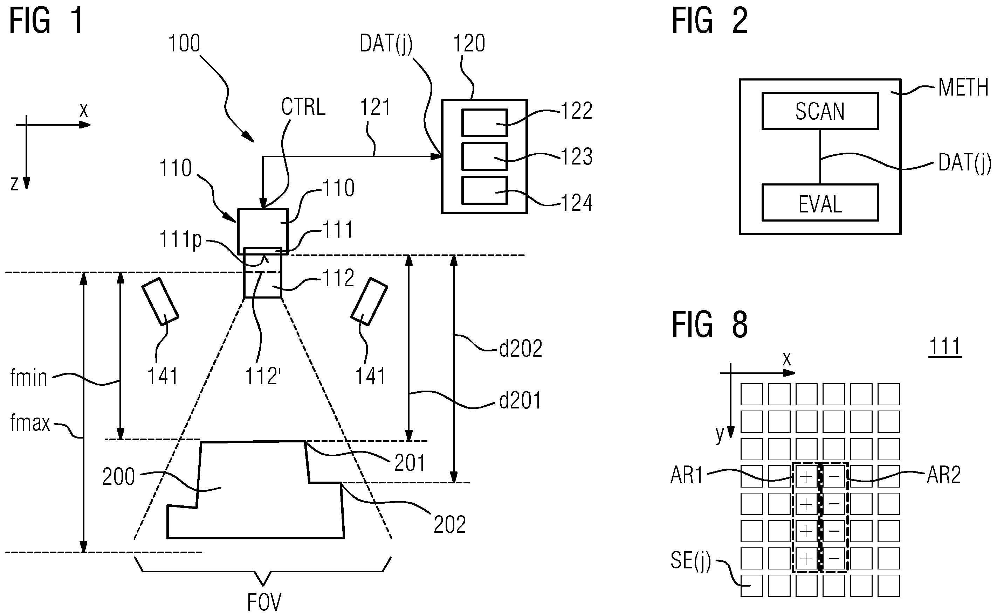

FIG 1 shows an arrangement of a scanning system 100 as well as an object 200 to be scanned by the scanning system 100 in three dimensions (3D). The scanning system 100 comprises a DVS camera 110 and an evaluation system 120, wherein the DVS camera 110 is configured and arranged such that it captures a field of view FOV positioned in a z-direction in front of the DVS camera 110. The object 200 to be scanned is arranged in the field of view FOV of the DVS camera 110.

The scanning system 100 is not only configured to capture 2D data of the object 200, i.e. representing the object's 200 properties in x-y-direction, but also to derive a depth information, i.e. information about the object 200 in the third dimension and in z-direction, respectively, to achieve the 3D scanning based on imaging data DAT(j) provided by the DVS camera 110.

Taking a contour line or an edge e201 of the object 200 as an example, it can be assumed that the edge e201 consists of a plurality of spatial features 201. Determining the 3D position of the edge e201, which might extend in space in any direction, means that the 3D positions of the features 201 can be determined individually. In the following, the determination of the 3D position is described for one feature 201. However, it will be clear that the 3D position and extension of the whole edge e201 in space is nothing but the entirety of 3D positions of its individual features 201. The solution described in the following of course enables that the 3D positions of several features 201 can be determined in parallel.

The 3D scanning would provide a feature's 201 position POS201=(x201, y201, z201) in three dimensions. The depth information and position, respectively, z201 of feature 201 would correspond to a distance d201 in z-direction of the respective feature 201 from a reference, e.g. a surface 111p of a sensor chip 111 of the DVS camera 110 as indicated in FIG 1.

For the purpose of 3D scanning, the evaluation system 120 is connected to the DVS camera 110 with a wired or non-wired connection 121. The evaluation system 120 and its control unit 124 are configured to control the DVS camera 110 with a control signal CTRL, e.g. with regard to setting of a momentary focal length f(t) of an optics section 112 of the camera 110, and to receive imaging data DAT(j) from the DVS camera 110, both via the connection 121.

Moreover, the evaluation system 120 is configured to determine the 3D spatial information about the object 200 based on an evaluation of the imaging data DAT(j) provided by the DVS camera 110.

For the purpose of 3D scanning and subsequent evaluation, the evaluation system 120 applies a scanning method SCMETH as described in the context of FIG 2 including a stage SCAN of scanning the object 200 and a stage EVAL of evaluating the data DAT(j) collected in the SCAN stage. The scanning method SCMETH might be implemented as a respective software executed by a processor 122 of the evaluation system 120. The evaluation system 120 might furthermore comprise a memory 123 for storing any data to be processed, e.g. the imaging data DAT(j), as well as the software to be executed by the processor 122, and/or any other suitable or required data.

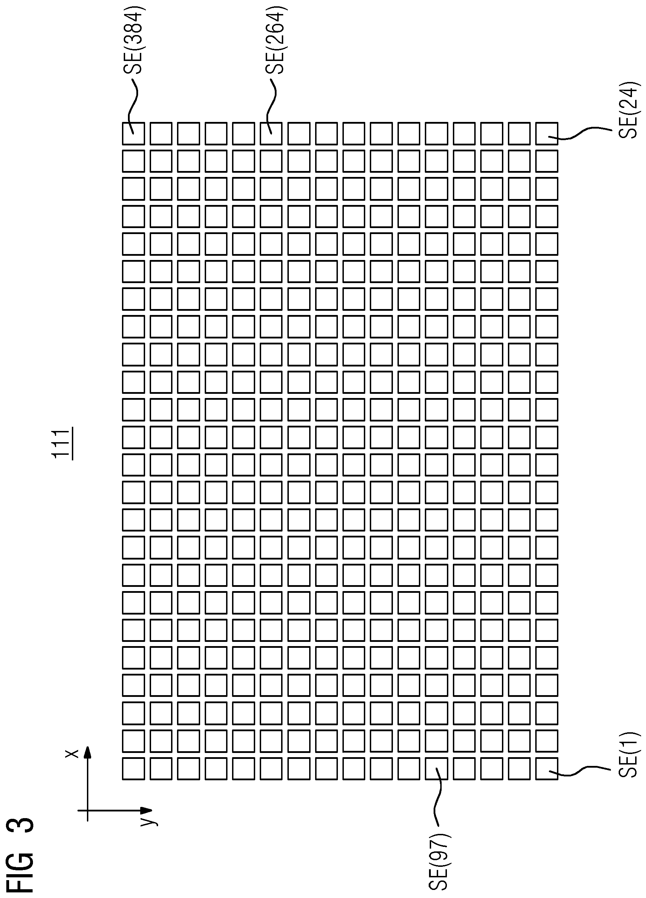

The DVS camera 110 has a sensor chip 111 with a plurality of light sensitive sensor elements SE(j) with j=1,...,J and J representing the total number of sensor elements SE(j), e.g. J≥10⁶. As a simplified example, a top view of a sensor chip 111 with only 16*24=384 sensor elements SE(j) is shown in FIG 3. Only a few of the sensor elements SE(j) have been marked with reference signs. The sensor chip 111 is a rectangular chip 111 with its sensor elements SE(j) arranged in rows and columns perpendicular to each other. The extensions of the planar, essentially two-dimensional sensor chip 111 define a coordinate system x, y, z, wherein the sensor chip's 111 plane defines the x direction in a first dimension as well as the y direction in a second dimension, while the z direction in the third dimension is perpendicular to the sensor chip's 111 plane and surface 111p, respectively.

In contrast to regular cameras, a signal SIG(j) generated by a DVS camera 110 for a given sensor element SE(j) does not directly or, for example, proportionally represent the intensity of light or the light flux FX onto the respective sensor element SE(j), but it depends on a relationship between a light flux FX onto the sensor element SE(j) at a point t(i) in time and a light flux FX onto the same sensor element SE(j) at an earlier point t(i-1) in time. More concrete, it shows whether a light flux FX at the sensor element SE(j) for a point t(i) in time differs from a flux FX at the same sensor element SE(j) at an earlier point t(i-1) in time by more than a given threshold THRES. In case such difference is indeed higher than the threshold THRES, a positive or a negative event is generated for the respective sensor element SE(j).

Thus, the DVS camera 110 is configured to generate for each sensor element SE(j) individually a signal SIG(j), in the following referred to as an "event signal" SIG(j), in case a light intensity or light flux, respectively, onto the respective sensor element SE(j) changes by more than the given threshold THRES, e.g. 15%, while no event signal is generated in case the flux change DELTAFX is less than or equal to the threshold THRES. Therein, the event signals SIG(j) are not assigned free floating values, but each event signal SIG(j) is selected from a predefined group GRP of event types, which group GRP can include at least a positive event and a negative event. Typically, the group GRP contains only two event types, i.e. "positive event" and "negative event". Thus, an event signal SIG(j), in case generated, can only be a positive event in case the flux FX changes to a higher flux by an amount DELTAFX with DELTAFX>THRES or it can be a negative event in case the flux changes to a lower flux by an amount DELTAFX with DELTAFX>THRES. In case the change DELTAFX of light flux onto a sensor element SE(j) is lower than or equal to the threshold THRES, i.e. DELTAFX≤THRES, no event signal SIG(j) is generated for the respective sensor element SE(j). Thus, event signals SIG(j) are only generated in case of significant flux changes, i.e. DELTAFX>THRES.

More concrete, considering a specific sensor element SE(j) of the sensor chip 111 of the DVS camera 110: In case the momentary flux FX(t(i)) onto the sensor element SE(j) is higher than the earlier flux FX(t(i-1)) onto the same sensor element SE(j) by more than THRES, i.e. FX(t(i))-FX(t(i-1)>THRES, the event signal SIG(j) generated for the specific sensor element SE(j) is a positive event. In case the momentary flux FX(t(i)) onto the sensor element SE(j) is lower than the earlier flux FX(t(i-1)) onto the same sensor element SE(j) by more than THRES, i.e. FX(t(i-1))-FX(t(i)>THRES, the event signal SIG(j) generated for the specific sensor element SE(j) is a negative event. In all other cases, in which the amount |FX(t(i))- FX(t(i-1))| of the difference between the fluxes FX(t(i)), FX(t(i-1)) is less than THRES, i.e. |FX(t(i))-FX(t(i-1)|≤THRES, no signal at all is generated for the respective sensor element SE(j). Correspondingly, the sensor elements SE(j) for which no event signal is generated are not assigned any symbol in respective figures.

The scanning method SCMETH for determining 3D spatial information of the object 200 beneficially applies the characteristics of such a DVS camera 110.

The DVS camera 110 has a body 113 which might comprise typical electronics including the sensor chip 111 introduced above as well as an optics section 112. Just as a regular camera lens, the optics section 112 can be made of an arrangement of one or more optical devices like lenses, apertures etc. and it has an effective principal plane 112'. Moreover, the optics section 112 is adapted to the dimensions of the sensor chip 111 and, in correspondence with the sensor chip's 111 dimensions, selected such that imaging the object 200 in the field of view FOV results in a projection of the object 200 onto the sensor chip 111.

The optics section 112 and the DVS camera 110, respectively, is configured to vary the focal length f in the stage SCAN in a variation range between a minimum value fmin and a maximum value fmax. Such focal length variation moves the focus point in z-direction and typically also results in a shift of the principal plane 112', wherein the concerned parameters f, g, b can be approximated based on the lensmaker equation 1/f=1/g+1/b with f representing the focal length, b representing the image distance, and g representing the object distance. For a known optics section 112, it can be assumed that f(t), g(t), and b(t) are well known for each point t in time. For example, b(t) can be fixed and known, while f(t) is variable and known so that g(t) can be calculated based on the lensmaker equation.

Preferably, the object 200 is arranged relative to the DVS camera 110 such that it can be completely scanned in the z-direction. For example, the distance of the point of the object 200 closest to the DVS camera 110 from the principal plane 112' is not less than fmin. Regarding the distance of the point of the object 200 farest from the DVS camera 110 from the principal plane 112' and required maximum focal length fmax, the well known lensmaker equation 1/f=1/b+1/g is again applicable. This ensures that the DVS camera 110 is configured to scan the object 200 completely in the third dimension and z-direction, respectively.

In the following, it is assumed that DVS camera 110 and object 200 are not moving relative to each other while the focal length f=f(t) of the DVS camera's 110 optics section 112 is varied over time t. For example, the focal length f(t) might be increased in a first phase of focal length variation starting from the minimum value fmin to the maximum value fmax, wherein the increase might be a linear function in time, i.e. f(t)=fmin+DF*t with DF=DF1 being a suitable constant value, representing the desired focal length increase rate. As soon as f(t)=fmax is achieved after running through the first phase, the focal length might be decreased again in a second phase of focal length variation, e.g. following a function f(t)=fmax-DF*t, until the minimum focal length fmin is achieved to complete a first cycle of focal length variation. In an alternative embodiment, the function f(t) is not a linear function as described above but, for example, a sinusoidal function, e.g. f(t)=C1*sin(DF*(t+t0))+C0. Therein, C1=(fmax-fmin)/2 and C0= (fmax+fmin)/2 might be useful while DF represents the desired change rate of the focal length and t0 is a fixed but arbitrary time offset.

In the following, one cycle of focal length variation might start at f(t=0)=fmin, reach f(t=T/2)=fmax, and return to f(t=T)=fmin, wherein T represents the time required to complete one cycle. As an alternative, the cycle might start at f(t=0)=(fmax+fmin)/2, increase f(t) to reach fmax, then decrease f(t) to reach fmin, and increase f(t) again to return to f(t=T)=(fmax+fmin)/2. Of course, other setups are imaginable. In any case, a "phase" of a cycle might be defined such that all available focal lengths f(t) between fmin and fmax would be applied at least one time during one phase.

In any case, a plurality of cycles of focal length variation might be applied to improve the accuracy of the approach, i.e. the focal length f(t) might be increased and decreased a plurality of times although, in principle, one phase of one cycle would be sufficient since all focal lengths f(t) between fmin and fmax would be applied one time during one phase. For example, DF and T might be selected such that 300 cycles are completed per second. For each feature 201 each cycle provides two insights about the respective feature's position z201 in z-direction, because the focal length f(t) corresponding to the respective feature's position in z-direction is applied twice per cycle - except for the two extremal points at fmin and fmax which are applied only once per cycle. The feature's position in z-direction might then be assumed to be the average of the individual values and the reliability improves with the number of values to be averaged. Thus, each completed cycle and, actually, each phase of such cycles of focal length variation improves the reliability of 3D scanning and position determination.

However, in the following only one phase of a cycle of focal length variation is explained, wherein the explanations can be easily applied with further phases and cycles, respectively.

Apart from the z-direction, only the x-direction is considered in the explanations while the y-direction is not explicitly addressed. However, considerations regarding the x-direction can be easily and without further ado be applied with the y-direction.

In a first mode of operation and execution of the method SCMETH, the focal length f(t) of the optics section 112 is varied during one phase, for example, starting with f(t=0)=fmin, i.e. with the minimum focal length, and it is assumed in this exemplary case that the focal length is varied in a linear manner, i.e. f(t)=fmin+DF*t. In the first mode of operation, the variation of the focal length is executed such that the focus position moves in the z-direction so that over time t different sections of the object 200 in z-direction are imaged sharply. However, it can be assumed that the momentarily applied focal length f(t) as well as g(t) and b(t) are known for each point t in time and, therewith, available for further processing in the evaluation system 120. At the same time, i.e. during the stage SCAN, any event signals SIG(j) generated by the sensor elements SE(j), i.e. either positive POS or negative events NEG, are transferred as part of the imaging data DAT(j) to the evaluation system 120 for further processing in the stage EVAL. Imaging data DAT(j) transferred from the DVS camera 110 to the evaluation system 120 for further processing in the evaluation stage EVAL include the event signal SIG(j) itself, an accurate time stamp TS(j) which stands for the point in time at which the sensor element SE(j) generated the event signals SIG(j), and an unambiguous identifier ID(j) of the respective individual event signal SIG(j) generating sensor element SE(j) to ensure that the position POS(j) of such event signal SIG(j) generating sensor element SE(j) on the sensor chip 111 is known. The position POS(j), which can be derived from the identifier ID(j), is required to determine the lateral position x201, y201 of the feature 201 as described later.

Varying the focal length f(t) during stage SCAN in the first mode of operation results in several effects:
A first effect exploits that a projection P201 of a feature 201 of the object 200, e.g. an edge or rim, onto the sensor chip 111 moves in lateral direction, i.e. in x- and/or y-direction, across the sensor chip's 111 surface 111p and sensor elements SE(j), respectively, when the focal length f(t) changes due to a respective change of magnification.

Considering the special behavior of a DVS camera 110 as described above, i.e. its sensitivity for changes of light flux but not for the flux' absolute value, the first effect of moving across the sensor chip 111 while changing the focal length f(t) might result in that those sensor elements SE(j), across which the projection P201 moves, indeed generate event signals SIG(j). However, this depends on whether the change DELTAFX=dFX in flux FX onto a respective sensor element SE(j) is higher than the threshold THRES. As outlined below, this requirement might not be fulfilled as long as the projection P201 of the feature 201 is too blurry. As a consequence, no sensor element SE(j) would generate an event signal SIG(j) corresponding to the feature 201.

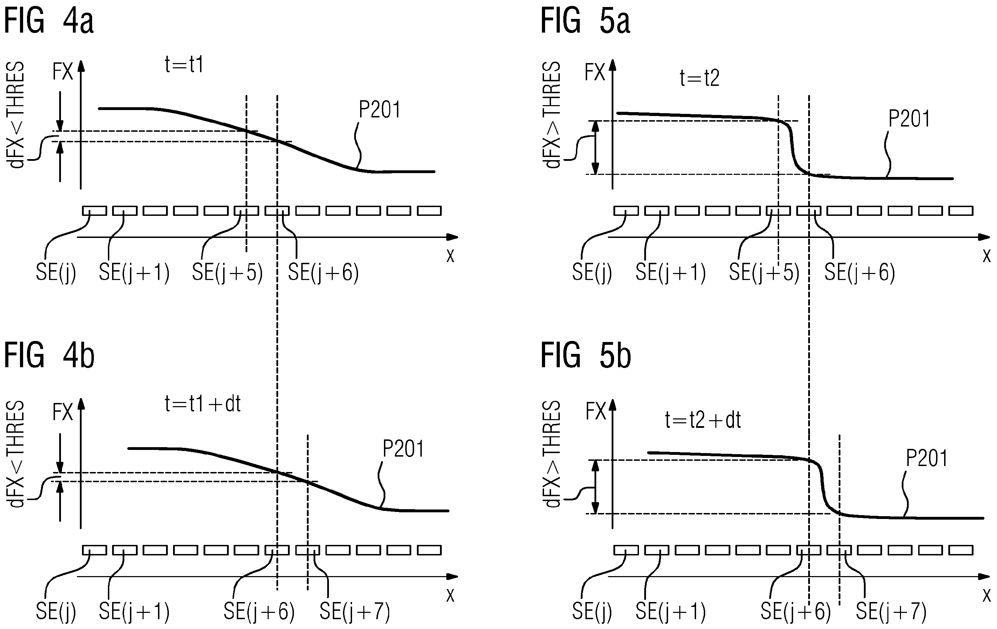

The first effect is illustrated in FIGs 4a, 4b and 5a, 5b. For the sake of clarity, consequences of the second effect introduced below are ignored in FIGs 4a, 4b, 5a, 5b and in the related explanations. Both FIGs 4a, 4b and FIGs 5a, 5b show in their lower sections a side view in y-direction on some of the sensor elements SE(j) of the sensor chip 111. The sensor elements SE(j) are arranged next to each other in x-direction and it can be assumed that light flux FX corresponding to the respective projections P201 is falling onto the sensor elements SE(j) from above. The flux FX onto individual sensor elements SE(j) is shown in the upper sections of the figures.

FIGs 4a, 4b show the situation of a blurry projection P201 at points t1, t1+dt in time, in which the momentary focal lengths f(t=t1), f(t=t1+dt) are such that the projections P201 of feature 201 onto sensor chip 111 are blurry and sharpness is low, respectively. Therein and in the following, the terms "sharp" and "sharpness" of a projection P201 essentially refer to the spatial extension of sections of the projection in lateral direction which represent a certain feature, e.g. edge 201. High sharpness means that the lateral extension of a projection of an edge of feature is minimal while low sharpness means a broad extension, i.e. a blurring effect. As can be seen in FIG 4a, the slope of projection P201 which represents the edge 201 essentially extends from signal element SE(j+2) to signal element SE(j+9), i.e. across eight signal elements SE, which is interpreted as low sharpness and strong blur. In contrast, FIG 5a shows a situation in which the slope of projection P201 which again represents the edge 201 essentially extends from signal element SE(j+5) to signal element SE(j+6) or even less, i.e. across one or two signal elements SE, which is interpreted as high sharpness and low blur.

Coming back to FIGs 4a, 4b and considering a point t1 in time, the difference dFX of flux FX between neighboring sensor elements SE(j+5) and SE(j+6) is small and less than the threshold THRES. Thus, a time span dt later, i.e. at a point t1+dt in time, when the projection P201 has moved a distance in x-direction which corresponds to the extension of a sensor element SE(j), the light flux FX onto the neighboring sensor element SE(j+6), as shown in FIGs 4a, 4b, would have changed by the amount dFX due to the movement of the projection P201. With dFX being less than THRES, sensor element SE(j+6) would not generate any event signal in this scenario.

In other words, the change dFX of flux FX at sensor element SE(j+6) between points t1 and t1+dt in time due to the movement of the projection in x-direction is only small due to the blurriness of the projection P201. Assuming dFX<THRES, no event signal would be generated.

In contrast, FIGs 5a, 5b show the situation of a projection P201 at points t2, t2+dt in time, in which the momentary focal lengths f(t=t2), f(t=t2+dt) are such that the projections P201 of feature 201 onto the sensor chip 111 are sharp and sharpness is high, respectively, while blur is low. In the shown example, the projection P201 clearly illustrates that the feature 201 belongs to an edge e201 of the object 200.

Therefore, at point t2 in time, the difference dFX of flux FX between neighboring sensor elements SE(j+5) and SE(j+6) is large and, especially, higher than the threshold THRES. Thus, a time span dt later, i.e. at a point t2+dt in time, when the projection P201 has moved a distance in x-direction which corresponds to the extension of a sensor element SE(j), the light flux FX onto sensor element SE(j+6), as shown in FIGs 5a, 5b, would have changed by the amount dFX>THRES due to the movement of the projection P201. With dFX being higher than THRES, sensor element SE(j+6) would generate an event signal SIG(j+6) at a dedicated point t0=f2+dt in time.

In other words, FIGs 5a, 5b show a scenario with the momentary focal length f(t) being such that the projection P201 of feature 201 onto the sensor chip 111 is sharp and does not suffer under significant blur. The change dFX of flux FX at sensor element SE(j+6) between points t2 and t2+dt in time due to the movement of the projection in x-direction is large due to the sharpness of the projection P201. Assuming dFX>THRES, an event signal SIG(j+6) would be generated by sensor element SE(j+6).

Thus, considering only the first effect, it becomes possible to identify the momentary focal length f(t0) corresponding to a certain feature 201 and, therewith, the aspired depth information d201 about that feature 201 based on the occurrence of the event signal SIG(j+6) for sensor element SE(j+6) which would be registered by the evaluation system 220 at a point t0=t2+dt in time: Assuming that the momentary setting of the focal length f(t) is well known for each point t in time and assuming that the point t0=t2+dt in time of the occurrence of the event signal SIG(j+6) is known as well, the actual focal length f(t0) at the dedicated point t0=t2+dt in time can be assumed to be known.

The position z201 of the feature 201 of the object 200 in z-direction can, therefore, be derived directly from that actual focal length f(t0). For example, still assuming the surface 111p of the sensor chip 111 representing the reference for determining the depth information, z201=d201=g(t0)+b(t0) can be assumed wherein 1/f(t)=1/g(t)+1/b(t) is still applicable. As mentioned earlier, b(t) can be constant and fixed, respectively, while f(t) is variable and known so that g(t) can be calculated based on the lensmaker equation.

Summarizing the first effect, any change of the effective focal length f(t) will also change the magnification and lateral imaging scale of each portion of the object 200 and in consequence of each geometrical feature e201, e202, e203 of the object 200. In consequence the sizes of the respective projections on the sensor chip 111 change accordingly. In effect this results in a lateral shift of the object features e201, e202, e203 with respect to the grid of sensor elements SE(j) on the sensor chip 111. Accordingly, this lateral shift due to scaling of image size can result in significant changes of the intensity and flux pattern as imaged on a sensor element SE(j) in case the momentary focal length results in sufficiently high sharpness of the projection P201 of feature 201. Thus, the DVS camera 110 will detect this change also to create a respective event signal SIG(j) depending on the rate and amount of change, especially in case of structural elements like edges, corners, boarder lines, or rims of geometrical structures like circles or holes, e.g. for a borehole with or without phase, threads etc. and even defects like dents or scratches. Due to this effect, structural elements tend to create a much higher number of events than homogenous plain or smooth surfaces. In addition, the DVS camera 110 is able to detect events at a much higher rate than a normal CCD or CMOS camera, e.g. one thousand or up to ten thousand times faster, and thus the detection efficiency of changes in the imaged scene is increasing significantly while the total amount of data created is decreased, typically by a factor of one hundred up tp one thousand, because event signals are only generated in case an event has indeed happened so that a huge number of sensor elements does not experience a significant change of content and thus do not create events.

A second effect exploits that the sharpness of the projection P201 of feature 201 on the sensor chip 211 changes with varying focal length f(t) and that the sharpness has direct impact on the light flux FX onto the sensor elements SE(j). As introduced earlier, the term "sharpness" of a projection P201 essentially corresponds to the spatial extension of sections of such a projection in lateral direction x, y. High sharpness means that the extension is minimal while low sharpness means a broad extension, i.e. a blurring effect. The sharpness of projection P201 depends on the momentary focal length f(t) and the distance d201 of feature 201 from the reference, e.g. the surface 111p of the sensor chip 111, in z-direction. Thus, knowledge about the sharpness of projection P201 of feature 201 can be used to derive the distance d201 of that feature 201 from the reference 111p. As with the first effect, this distance d201 represents the aspired depth information about the object 200.

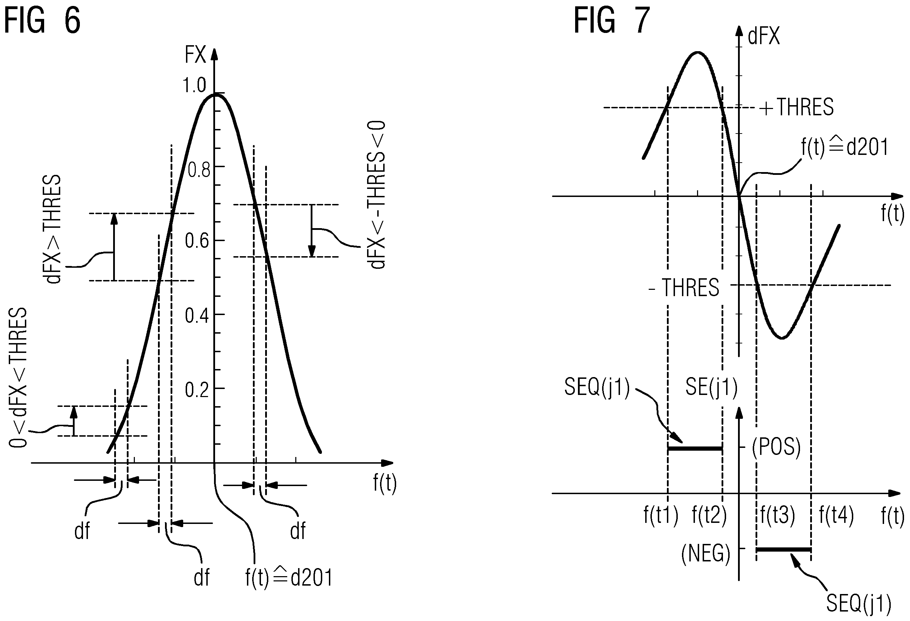

The second effect is illustrated in FIGs 6, 7. For the sake of clarity, consequences of the first effect introduced above, i.e. lateral movement of the projection P201 across the sensor chip 111, are ignored in FIGs 6, 7 and in the related explanations of the second effect. FIG 6 shows a diagram illustrating the development of intensity and light flux FX, respectively, onto a given sensor element SE(j1) depending on the momentary focal length f(t). A maximum of flux FX is found at f(t0), corresponding to maximum sharpness of the projection P201 of feature 201.

The corresponding changes dFX in flux FX due to changes df of focal length f(t), which is the essential measure for causing the given sensor element SE(j1) to generate an event signal SIG(j1), is shown in FIG 7. In other words, FIG 7 represents the slope of the curve shown FIG 6. Moreover, FIG 7 also includes the changes dFX in flux FX required to cause the event signal SE(j1), which is expressed by the threshold THRES introduced earlier. In case the change dFX is higher than the threshold THRES, i.e. dFX>THRES, a positive event is generated. In case the change dFX is less than the negative threshold -THRES, i.e. dFX<-THRES, a negative event is generated.

FIG 7 clarifies that increasing the momentary focal length f(t) leads to an increase of dFX which exceeds the threshold THRES between points t1 and t2 in time so that at least one or, typically, a sequence SEQ(j1) of several event signals SIG(j1) of a first type, e.g. positive events, is generated as illustrated in the lower part of FIG 7, symbolized by "(POS)". Therein, t1 represents the point in time at which the first one of the positive event signals of the sequence SEQ(j1) is generated, while t2 represents the point in time at which the last one of the positive event signals of the sequence SEQ(j1) is generated. Between points t2 and t3 in time, dFX is less than THRES, so that no event signal is generated by SE(j1). Actually, the point t0 in time at which the momentary focal length f(t0) is such that the projection P201 of feature 201 has maximum sharpness lies between t2 and t3. Between points t3 and t4 in time, the flux change dFX is less than -THRES, i.e. the amount |dFX| is higher than THRES, so that at least one or, typically, a sequence SEQ(j1) of event signals SIG(j1) of a second type, e.g. negative events, is generated as illustrated in the lower part of FIG 7, symbolized by "(NEG)". Therein, t3 represents the point in time at which the first one of the negative event signals of the sequence SEQ(j1) is generated, while t4 represents the point in time at which the last one of the negative event signals of the sequence SEQ(j1) is generated.

The pattern PAT(j1) formed by the one or more positive event signals SIG(j1)=POS for t1<t<t2 generated for focal lengths between f(t1) and f(t2) and the one or more negative event signals SIG(j1)=NEG for t3<t<t4 generated for focal lengths between f(t3) and f(t4) allows to estimate the focal length f(t0) corresponding to maximum sharpness, e.g. via an interpolation approach. This is based on the fact that the time dependence of the focal length f(t) during focal length variation is well known, i.e. f(t0) can be derived from the knowledge of the point t0 in time at which the momentary focal length f(t) is such that sharpness of the projection P201 is highest. For that purpose, t0 can be derived from the knowledge of two or more of the points t1, t2, t3, t4 in time. Assuming that the pattern PAT(j1) is essentially symmetric with f(t0) being the symmetric pattern's center point, a simple exemplary interpolation approach to calculate t0 might be t0=(t2+t3)/2. However, other approaches which also consider t1 and/or t4 are imaginable.

Knowledge of t0 now allows to determine the corresponding momentary focal length f(t0) based on the well known time dependence of f(t), e.g. f(t0)=fmin+DF*t0. As with the first effect, the position z201 of the feature 201 of the object 200 in z-direction can be derived directly from that actual focal length f(t0). For example, again assuming the surface 111p of the sensor chip 111 representing the reference for determining the depth information, z201=d201=g(t0)+b(t0) can be assumed, wherein 1/f(t)=1/g(t)+1/b(t) is still applicable, e.g. with b(t) being constant and fixed, respectively, while f(t) is variable and known so that g(t) can be calculated based on the lensmaker equation.

As a summary of the second effect, varying the focal length f(t) results in that projections P201 of object 200 structures like edges e201 etc. and, therewith, of features 201 as introduced above are blurry, then become more and more sharp, reaching maximum sharpness at a point t0 in time at a momentary focal length f(t0), and then become blurry again. Therein, reaching the maximum sharpness means that light flux FX strongly changes in a time span around t0, which finally results in sequences of positive and negative event signals during that time span from which t0 can be interpolated. The knowledge of t0 and the knowledge of the temporal behavior of f(t) allows to determine the momentary focal length f(t0) and thus the position of the sensor chip's 111 conjugated plane in object space which represents the distance d201 from the reference 111p and, correspondingly, the z-position of feature 201.

Thus, the second effect builds on the fact that the sharpness of each object feature 201, 202, 203 changes with the change of effective focal length f(t) of the optics section 112. This results in that the steepnesses of, for example, gray level profiles of edges on the sensor stemming from the features 201, 202, 203 also change, which results in a change of the lateral intensity and flux distribution on the sensor chip 111. In other words, the focal length variation effects a spatial redistribution of light flux due to the mere defocusing effect, i.e. a redistribution of flux around edges by defocusing. Also, this redistribution of energy of the optical light field will create events in neighboring sensor elements SE when the flux FX rises or falls due to the energy redistribution due to focusing quality. This effect will characterize edges or feature contours etc. by neighboring positive and negative event signals along the edge direction or feature contour line.

In an alternative, second mode of operation and execution of the method SCMETH, the focal length f(t) of the optics section 112 can be varied as described earlier, but at the same time the focus position in object space is maintained. In that case, a third effect is caused in that the magnification of a projection, e.g. the projection P201 of feature 201, on sensor chip 111 changes with changing focal length f(t), while the sharpness of the projection P201 of feature 201 remains essentially constant. However, the sharp projection P201 of feature 201 shows a lateral movement across the sensor chip 111 and sensor elements SE(j) due to the change of magnification, therewith causing events and respective event signals SIG(j) for all features 201 close to the momentary focus position in z-direction.

In the second mode of operation, the propagation speed of the lateral movement of a feature's 201 projection P201 is a measure for the respective distance d201 of this feature to the reference 111p. By comparing the relative speed of lateral motion for at least two different features 201, 202 results in an indicator for the different distances d201, d202 of the two features 201, 202 from the reference 111p. The comparison takes into account the lateral offsets of the respective projections P201, P202 to the optical axis, since these offsets are also influencing the lateral motion via the change of focal length and, thus, magnification. This second mode of operation is well suited for features 201, 202 in the far field of the optics section 112, i.e. where the distance d201, d202 is significantly larger than the effective focal length f(t) of the optics section 112.

The change of magnification for a change of focal length is also inherent for the first effect and the second effect and can also be evaluated there to an intrinsic depth scaling in the image data as initiated by the change in focal length.

The scanning method SCMETH builds on the effects summarized above in the context of the first and second mode of operation. The effects have been explained independent from each other, i.e. without considering the respective other effect, for the sake of clarity. In reality all the effects influence at the same time whether a sensor element SE(j) generates an event signal SIG(j) or not. However, especially the first and the second effect make use of the steep increase and decrease of flux and projection P201 related to feature 201 when the momentary focal length f(t) is such that the projection P201 of feature 201 onto the sensor chip 111 is sufficiently sharp.

The predominant impact used herein is the change in flux FX to an extremal value at the best focus position and the fast change of flux values in the vicinity of the best focus. Therein, strong blur, **i.e.** low sharpness, results in that even the movement of projections due to the first effect does not result in sufficiently high change of light flux onto a sensor element. Therefore, as long as the momentary focal length f(t) differs significantly from the distances d201 the impact of the first effect is low due to the blur so that no event signals corresponding to feature 201 are generated.

For all the effects introduced above a momentary focal length f(t0) is determined based on a selected point t0 in time at which a certain event signal SIG(j) has been generated due to a certain feature 201. Features 201, 202, 203 in different depths and thus different distances d201, d202, d203 from the reference 111p will cause events at points t0_201, t0_202, t0_203 in time correlated with different, well known focal lengths f(t0_201), f(t0_202), f(t0_203). However, such points t0 in time, expressed by the time stamps TS(j) or any other suitable means, might be provided by the DVS camera 110 as a part of the imaging data DAT(j) and the evaluation system 120 processes the time stamps TS(j) to derive the momentary focal length f(t0=TS(j)). This assumes that the control of the focal length variation and the reading out of event signals SIG(j) are synchronized. In other words, a clock of the DVS camera 110 and a clock of the control unit 124 for controlling the focal length f(t) of the optics section 112 and/or of the evaluation system 120 are synchronized and use the same accurate time base so that the momentary focal length f(t) can be accurately determined for a time stamp TS(j) belonging to an event signal SIG(j). Since the DVS camera 110 can detect events very fast and thus in tight time sequence, the change in the effective focal length f(t) can be very fast, e.g. 300 cycles per second, in order to have a perfor-mant 3D scanning for capturing a given depth range.

In general terms the z-position d201 to be determined for the feature is determined based on the momentary focal length f(t0) and/or related g(t0) and/or b(t0) according to the point t0 in time. The selection of the point t0 in time is such that t0 represents a point in time during the focal length f(t) variation at which a temporal and/or spatial pattern of one or more event signal SIG(j) generating sensor elements SE(j) fulfills a predefined condition or corresponds to a predefined pattern, respectively.

Therein, the "temporal and/or spatial pattern" of event signal SIG(j) generating sensor elements SE(j) might, in the simplest case, prescribe that one of the sensor elements SE(j) has to generate an event signal at some point t0 in time: In that case, the predefined condition is assumed to be met in case an event signal SIG(j) of any event signal type, e.g. a positive event POS or a negative event NEG, is generated at a point tp in time, wherein t0 is selected to be identical to the point tp in time, i.e. t0=tp.

In a more elaborate case, the pattern might be a temporal pattern which might consider the same sensor element SE(j) over time and the temporal development of even signals SIG(j) generated by that sensor element SE(j) is observed.

I.e. the temporal pattern is characterized in that the sensor element SE(j) has to generate an event signal at a first point t1 in time and a further but different event signal at a second point t2≠t1 in time. In a similar way, the temporal pattern might be characterized in that the sensor element SE(j) has to generate a sequence SEQ(j) of event signals SIG(j) of a first type, e.g. SIG(j)=POS, during a first time span dt12 between points t1, t2 in time and a sequence SEQ(j) of further, but different event signals SIG(j), e.g. SIG(j)=NEG, during a second time span dt34 between points t3, t4 in time.

In more general terms, the temporal pattern might be characterized in that the sensor element SE(j) has to generate a sequence SEQ(j) of one or more event signals SIG(j) of a first type, e.g. SIG(j)=POS, during a first time span dt12 between points t1, t2 in time and a sequence SEQ(j) of one or more further, but different event signals SIG(j), e.g. SIG(j)=NEG, during a second time span dt34 between points t3, t4 in time.

A spatial pattern might consider different sensor elements SE(j1), SE(j2) and the event signals SIG(j1), SIG(j2) generated by them are observed. Such a spatial pattern might be characterized in that one of the sensor elements SE(j1) has to generate an event signal SIG(j1) of a first type and the other sensor element SE(j2) has to generate an event signal SIG(j2) of a different type, essentially at the same point t0 in time.

A mixed pattern which is both a spatial and a temporal pattern might consider different sensor elements SE(j1), SE(j2) over time t. Such a mixed pattern might be characterized in that, for example, the first sensor element SE(j1) generates a first event signal SIG(j1) or a sequence SEQ(j1) of first event signals SIG(j1) of a first type, e.g. a positive event signal POS, at a first point or time span t1 in time, while the related second event signal SIG(j2) or sequence SEQ(j2) of event signals SIG(j2) of a second type, e.g. a negative event signal NEG, is generated at a second point or time span t2≠t1 in time, but other than in the scenario of the purely temporal pattern, is generated by a second, different sensor element SE(j2). The second sensor element SE(j2) might be in the neighborhood of the first sensor element SE(j1), but it is not the same sensor element in the case of a mixed or purely spatial pattern.

In a more complex scenario, the predefined condition is assumed to be met in case, for a first one of the sensor elements SE(j), a first sequence SEQ(j) comprising one or more event signals SIG(j) of a first event signal type, e.g. a positive event POS, is generated between points t1 and t2 in time with t2≥t1 and, for a sensor element SE(j') of the plurality of sensor elements SE(j) which is unambiguously related, i.e. in a given neighborhood, to the first sensor element SE(j), a second sequence SEQ(j') comprising one or more event signals SIG(j') of a second event signal type, e.g. a negative event NEG, is generated between points t3 and t4 in time with t4≥t3 and t3>t2,
wherein t0 is selected to be in the range t2<t0<t3, especially t0=(t2+t3)/2. This includes the situation with one or both of the sequences SEQ including only one event signal. Then, the predefined condition is assumed to be met in case, for a first one of the sensor elements SE(j), a first event signal of a first event signal type, e.g. a positive event POS, is generated at a point t1 in time and for a sensor element SE(j') of the plurality of sensor elements SE(j) which is unambiguously related to the first sensor element SE(j), a second event signal of a second event signal type, e.g. a negative event NEG, is generated at a point t2 in time with t2>t1, wherein t0 is selected to be in the range t1<t0<t2, especially t0=(t1+t2)/2. A sensor element SE(j') "unambiguously related" to the first sensor element SE(j) might be identical to the first sensor element SE(j), i.e. SE(j')=SE(j). However, as has been explained above exemplarily in the context of the "first effect" in the first mode of operation, the focal length f(t) variation leads to a lateral shift of the projection P201 of the considered feature 201 on the sensor chip 111 due to a change in magnification and lateral imaging scale related to the focal length f(t) variation. Thus, it might happen that the projection P201 of the feature 201 which has fallen onto sensor element SE(j) at point t1 in time has moved to sensor element SE(j') at point t2 in time so that the positive POS and the negative event signals NEG are generated by different sensor elements SE(j), SE(j'). However, with the properties and dimensions etc. of the DVS camera's 110 optics section 112 as well as points t1, t2 in time and the corresponding momentary focal lengths f(t1), f(t2) being well known, it can be assumed that it can be predicted easily at which sensor element SE(j') an event of a second type has to occur in case an event of a first type has occurred at sensor element SE(j). Thus, such sensor element SE(j') and sensor element SE(j) are "unambiguously" related to each other. In short, sensor elements SE(j), SE(j') are unambiguously related to each other in case both sensor elements are located on the sensor chip 111 within a predefined distance DIST from each other, wherein the predefined distance DIST is determined based on the speed of change of the focal length f(t) during the focal length variation.

In this scenario, the pattern of event signal SIG(j) generating sensor elements SE(j) is a pattern in time, considering the same sensor element SE(j) over time. In case the same sensor element SE(j) first, at a point t1 in time, generates an event signal of a first type, e.g. a positive event signal, and subsequently, at a point t2 in time, generates an event signal of a different type, e.g. a negative event signal, it can be assumed that the point t0 in time must have occurred between those points t1, t2 in time. Therein, it is possible that the sensor element SE(j) did not generate an event signal between those points t1, t2 in time.

It is possible that the projection P201 of feature 201 is not limited to only one sensor element SE(j1) but it might extend across an area AR1 on the sensor chip 111 which covers a plurality of sensor elements SE(j1, SE(j2), SE(j3),.... This is depicted in FIG 8 which shows a top view on a section of the sensor chip 111. In such a scenario the predefined condition might be assumed to be met in case, for one or more sensor elements SE within a first area AR1 on the sensor chip 111, first event signals SIG(j) of a first event signal type, e.g. a positive event POS, are generated between points t1 and t2 in time with t2≥t1, and, for one or more sensor elements SE within a second area AR2 on the sensor chip 111 unambiguously related, i.e. in a given neighborhood, to the first area AR1, second event signals SIG(j') of a second event signal type, e.g. a negative event NEG, are generated between points t3 and t4 in time with t4≥t3 and t3>t2, wherein t0 is selected to be in the range t2<t0<t3, especially t0=(t2+t3)/2.

For example, the first area AR1 and the second area AR2 are unambiguously related to each other in case they overlap or they are adjacent to each other, i.e. at least one sensor element SE of the first area AR1 is adjacent to at least one sensor element SE of the second area AR2. "Adjacent" means that essentially no further sensor element SE lies between those "adjacent" sensor elements SE.

The lateral position x201, y201 of the feature 201 in x- and y-direction can be derived from the x- and y-position POS(j) of the event signal SIG(j) generating sensor element SE(j) on the sensor chip 111, since the optical properties of the optics section 112 like, for example, magnification and scaling etc., again depending on the actual focal length f(t0) are also well known. As mentioned earlier, the position POS(j) of the sensor element SE(j) or its identifier ID(j) is transferred together with the event signal SIG(j) to the evaluation system 120 with the imaging data DAT(j). Thus, the lateral position x201, y201 of the feature 201 can be derived from the knowledge of the identity ID(j) of the event signal SIG(j) generating sensor element SE(j) and the actual focal length at point t0 in time when signal element SE(j) generates the respective event signal SIG(j).

The method METH for 3D scanning of the object 200 has been described with focus on determination of the 3D position x201, y201, z201 of one particular feature 201 of the object, wherein that feature 201 is only one of typically several elements of an edge e201 or a contour line or similar of the object 200. Thus, determining the 3D position of the whole contour line e201 means to determine the 3D positions of the individual features which form the contour line e201. For a given characteristic of the object 200, e.g. a contour line, e.g. edge e201, there are two aspects in the imaging process of a DVS camera 110. The contour line e201 can be characterized by a sequence of positive event signals SIG=POS on the one side and a second series of negative event signals SIG=NEG on the other side of the contour line e201. For reference purposes by a cross check the contour line e201 can be determined in image stacks of a classical full frame camera image. The second aspect is the advent of a peak flux with a high or low value, dependent on the type of characteristic. There will be a sequence of positive POS and negative NEG event signals for a given sensor element SE as the focal length f(t) traverses the best focus position. So, a peak detection and interpolation in the time series of events might be applied. To fit the interpolating curve, a characteristic peak shape can be used to precisely allocate the events on the trough focus curve of the respective optics section 112. This has been described in the context of the second effect.

The lateral shift of the image by the focal length variation and/or the depth dependent change of imaging scale and magnification, respectively, can also be employed for a more detailed analysis for sub-pixel accuracy of the feature or edge position in the image space. Since the image light flux gets laterally re-distributed with respect to the grid of sensor elements SE of the sensor chip 111, the event signals SIG can be evaluated according to the characteristic focusing shift of the image intensity with respect to the best focus position in order to determine the sub-pixel shift of the curve in order to determine the real feature edge or contour line position for a given edge position. This characteristic can be used to overcome limitations of the DVS camera 110 for geometrically precise measurements as imposed by the quantized nature of the event detection itself with a given threshold value.

It becomes clear from the above that an essential feature of the optics section 112 is its ability to vary the focal length f(t). This can be achieved via different realizations.

For example, the optics section 112 might apply a classical zoom lens, where the effective focal length f(t) is changed while zooming.

Alternatively, the optics section 112 might apply a lens with a fixed focal length, but the lens can be shifted axially, i.e in z-direction, in order to change the distance from the lens to the image plane. This shift can be implemented physically by a relative mechanical movement or shift.

As another alternative, the optics section 112 might include an optical medium which is positioned between the arrangement of other optical devices like lenses and apertures etc. of the optics section 112 and the sensor chip 111. The effective optical thickness and length, respectively, can be changed by certain control parameters. Possible implementations of the optical medium might be based on, for example, electro-optical materials, magneto-optical materials, stress, strain, or pressure controlled optical thickness of a respective material compartment in the optical beam path, bi-refringent material where the orientation of the bi-refringent optical elements is changed by external fields, physical rotation of optical medium to change effective thickness, and/or prisms which are shifted in a way that the effective optical thickness gets changed in the imaging beam path. This results in an effective change of the plane in object space being in best focus when imaged onto the sensor chip 111.

In a further realization, the optics section 112 might include a liquid focusing lens and, optionally, a classical fixed focus imaging lens. The change of effective focal length f(t) can be introduced via the control signal CTRL from the control unit 124 of the evaluation system 120 by a voltage or current controlling the liquid lens optical power. For example, a total tuning range of four to more than twenty dioptres might be realistic in this setup. A proper and tight coupling of the timing of the DVS camera 110 and the control voltage or current for the liquid lens would result in a correlation of events detected at a time t and the setting of the effective focal length f(t) of the optics section 112 at that respective point t in time. For example, control frequencies might be in the range from 0.25Hz to 2000Hz and the overall system can be as fast as 100kHz to properly control a pre-defined change of optical refractive power.

The optical imaging system and optics section 112, respectively, may comprise any combination of a variable optical element like a liquid lens and/or classical lenses to achieve an optical system with appropriate imaging properties and the ability to change its refractive power or focal length. In a preferred embodiment, at least one variable optical element is located in or close to or in the vicinity of an aperture plane of the optics section 112 to maximize the effect on the change of the refractive power of the optics section 112 or the respective focal length.

Another realization, preferably implemented with a microscope, might either use a liquid lens as described above or, in a standard configuration, apply a continuous motion of the object to be scanned in z-direction along the focusing axis, e.g. in sinusoidal, triangular, trapezoidal or ramp type of motion characteristics, e.g. with a standard z-drive. As with the other realizations, a common accurate time base or coupling of data for the mechanical motion of the z-drive and the time stamps TS(j) of the event signals SIG(j) is required, which is possible with µs accuracy or even better, so that the events can be allocated to a respective and well-defined z-position, corresponding to the distance d201 introduced above which represents the z-position z201 of the respective feature 201. In case of a standard microscope, the accurate timing and position information capability might have to be added, since microscopes typically take camera images when the sample is in rest or in slow motion. In the DVS camera based 3D scanning approach introduced herein, the z-motion can be much faster or larger than a portion of, a few or a couple of µm in the exposure time of a classical CCD or CMOS camera. The position of the z-drive can be derived from microscope control parameters like the drive voltage for a piezo unit, steps number for a stepping motor, an encoder or a position and/or focus sensor like chromatic focus sensors and the like.

Preferably, the scanning system 100 includes an illumination system with one or more light sources 141, e.g. LEDs, which need to provide a constant light flux which is preferably homogenous over the entire field of view. Since typical DVS cameras 110 are monochromatic, the illumination can be monochromatic too or it is a multicolor illumination, e.g. in the ultraviolet, short wavelength infrared, or in the visible spectrum. When the illumination system is capable of generating one wavelength at a time, a preferred mode of operation could be one illumination color for one focal length variation phase, e.g. for f(t) increasing from fmin to fmax, and then another wavelength for the next focal length variation phase, e.g. in the opposite direction, i.e. from fmax to fmin. Switching illumination during one focal length variation phase might create additional or artificial event signals SIG just caused by changing the illumination instead of changing imaging properties of the object 200 itself. Preferably it is known at which wavelength each light source 141 is operated at one focal length variation phase and the respective information might be appended the dataset DAT. All known and typically applied illumination modalities can be combined, like bright field transmitted light, bright field reflected light, dark field reflected light or dark field transmitted light, as well as any kind of mixed forms or modalities. Further contrasting methods like polarization might also be combined for the illumination. Whatever the illumination setting with respect to wavelength, bandwidth, illumination modality, or further settings like polarization might be, it is preferential to keep this setting at least for one focal length variation phase constant, so that all information from the DVS camera 110 can primarily be directly assigned to the object 200 itself.

Typically, DVS cameras 110 have a monochromatic sensor 111 and not a color filter to capture color images. To capture color images, the illumination of the object 200 can be changed from one color to another from one focus loop, e.g. consisting of one or more cycles or phases of focal length variation, to the other and the final imaging data DAT are fused afterwards into a full color image. Alternatively, a combination with a color camera is a beneficial embodiment in order to have a full color image of the object 200 plus at least at a single focusing plane plus the event-based 3D information DAT of the fast moving DVS imaging mode, including at least one phase, but preferably several cycles of focal length variation. Of course, the color camera might also be operated in parallel to the 3D scanning with the DVS camera 110. This might blur the images a bit, but this information might be still of great help to colorize the event-based object image from the DVS camera 110 properly. The resulting image can be prepared by fusing the data from the DVS and the color camera. In general, the DVS camera can be combined with any other camera for full image view in the same or even other spectral ranges, typically in the range from UV - VIS - NIR - SWIR and it might be advantageous to decouple the measuring wavelength of the DVS camera from the additional cameras by spectral filters, preferably dichroic mirrors. In one embodiment, the at least two cameras use the same imaging lens and the beam path gets split between the cameras in the space between the lens and the first camera.

Thus, color images of the object can be generated either by means of the illumination system or by combining the DVS camera 110 with at least a traditional camera to obtain color information for the respective features of the object 200. These color images do not necessarily need to be taken at the exact focus position and can be blurred since the fast focus change securely detectable by the DVS are too fast for classical cameras. Thus, these images get blurred when the speed of the DVS camera is maintained.

Since DVS cameras 110 detect changes in the flux FX per sensor element SE and generate an event if the photocurrent rises or lowers by a pre-defined amount, they automatically adapt themselves to the actual irradiance level for each sensor element SE in the operating range of the DVS camera 110 with respect to speed given by the minimal read out time of the sensor elements's SE photocurrent and the maximum time for this evaluation. In concrete, but to be understood as an example, this might result in an effective dynamic range of more than 100dB or even 120dB and above, compared to about 40 to 50dB for standard CMOS or CCD cameras with full frame read out. This capability is a result of the DVS sensor chip's 111 intrinsic ability to adapt locally to the respective signal strengths so that it applies the full well capacity of a sensor element SE with different exposure times where the respective sensor element is monitoring for a change in light exposure. In effect this makes up the effective dynamic range of 100dB and above.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments, but variations can be derived by a person skilled in the art without deviation from the scope of the invention.

## Claims

1. Method SCMETH for camera (110) based determination of a position of a feature (201) of an object (200) relative to a reference position (111p) of the camera (110), wherein the object (200) is positioned in a field of view FOV of the camera (110) which extends from the camera (110) in a z-direction,
wherein the camera is a DVS camera (110)
-- comprising a sensor chip (111) with a plurality of sensor elements SE(j), and
-- being configured to generate for each sensor element SE(j) individually imaging data DAT(j) including an event signal SIG(j) from a group GRP of event signal types in case a light flux FX onto the respective sensor element SE(j) changes by more than a given threshold THRES, and
- wherein the method comprises
-- a stage SCAN of scanning, wherein a focal length f(t) of an optics section (111) of the DVS camera (110) is varied according to a predefined pattern f(t) in time, and
-- a stage EVAL of evaluation, wherein any one or more imaging data DAT(j) generated by the DVS camera (110) during the focal length variation of the stage SCAN are evaluated to determine at least a z-position d201 of the feature (201) in the z-direction.

2. Method according to claim 1, wherein each imaging data DAT(j) includes
- the generated event signal SIG(j) itself,
- a time stamp TS(j) which represents the point t in time at which the sensor element SE(j) generated the respective event signal SIG(j), and
- an identifier ID(j) of the respective individual event signal SIG(j) generating sensor element SE(j).

3. Method according to any one of claims 1 to 2, wherein the z-position d201 to be determined for the feature (201) is determined based on the momentary focal length f(t0) according to a point t0 in time which is selected to be representing a point in time during the focal length f(t) variation at which a temporal and/or spatial pattern of one or more event signal SIG(j) generating sensor elements SE(j) fulfills a predefined condition.

4. Method according to claim 3, wherein the predefined condition is assumed to be met in case an event signal SIG(j) is generated at a point tp in time, wherein t0 is selected to be identical to the point tp in time.

5. Method according to any one of claims 3 to 4, wherein the predefined condition is assumed to be met in case,
- for a first sensor element SE(j), a first sequence SEQ(j) comprising one or more event signals SIG(j) of a first event signal type is generated between points t1 and t2 in time with t2≥t1 and
- for a sensor element SE(j') unambiguously related to the first sensor element SE(j), a second sequence SEQ(j') comprising one or more event signals SIG(j') of a second event signal type is generated between points t3 and t4 in time with t4≥t3 and t3>t2,
wherein t0 is selected to be in the range t2<t0<t3, especially t0=(t2+t3)/2.

6. Method according to claim 5, wherein sensor elements SE(j), SE(j') are unambiguously related to each other in case both sensor elements are located on the sensor chip within a predefined distance DIST from each other, wherein the predefined distance DIST is determined based on the speed of change of the focal length f(t) during the focal length variation.

7. Method according to any one of claims 3 to 6, wherein the predefined condition is assumed to be met in case,
- for one or more sensor elements SE within a first area on the sensor chip, first event signals SIG(j) of a first event signal type are generated between points t1 and t2 in time with t2≥t1, and
- for one or more sensor elements SE within a second area on the sensor chip unambiguously related to the first area, second event signals SIG(j') of a second event signal type are generated between points t3 and t4 in time with t4≥t3 and t3>t2,
wherein t0 is selected to be in the range t2<t0<t3, especially t0=(t2+t3)/2.

8. Method according to claim 7, wherein the first area and the second area are unambiguously related to each other in case they overlap or they are adjacent to each other.

9. Method according to any one of claims 3 to 8, wherein the z-position of the feature (201) is determined to be the distance of the momentary focal point of the optics section (112) from a surface (111p) of the sensor chip (111) at the determined point t0 in time, wherein the momentary distance of the focal point is derived from the momentary focal length f(t0) according to the selected point t0 in time.

10. Method according to any one of claims 1 to 9, wherein the optics section (112) execute the focal length f(t) variation according to the predefined pattern f(t) in time such that
- its focal length f(t) is varied and
- its focus position moves in the z-direction due to the focal length f(t) variation.

11. Method according to any one of claims 1 to 9, wherein the optics section (112) executes the focal length f(t) variation according to the predefined pattern f(t) in time such that
- its focal length f(t) is varied and
- its focus position stays constant at a selected position in the z-direction.

12. Method according to claim 11, wherein the stage SCAN is executed multiple times, wherein different constant focus positions in the z-direction are selected for different executions of the stage SCAN.

13. Method according to any one of claims 11 to 12, wherein, for each execution of the stage SCAN, positions POS(j,t) of those sensor elements SE(j) on the sensor chip (111) are observed over time t, which generate event signals SIG(j) during focal length f(t) variation corresponding to a projection (P201) of the feature (201) onto the sensor chip (111), to determine a lateral propagation speed VEL(POS(j,t),t) of the projection (P201) of the feature (201) across the sensor chip (111) due to the focal length f(t) variation, wherein a representation of the z-position d201 to be determined for the feature (201) is estimated based on the lateral propagation speed VEL(POS(j,t),t).

14. Method according to any one of claims 1 to 13, wherein a lateral position x201, y201 of the feature 201 in x- and y-direction is derived from the position POS(j) of the event signal SIG(j) generating sensor element SE(j) on the sensor chip (111), wherein the position POS(j) is derived from the identifier ID(j) of the respective individual event signal SIG(j) generating sensor element SE(j).

15. Scanning system (100) for camera based determination of a position of a feature (201) of an object (200) relative to a reference position (111p) of the camera, wherein a field of view FOV of the camera (110) for scanning the object (200) extends from the camera (110) in a z-direction, comprising
- a DVS camera (110) comprising a sensor chip (111) with a plurality of sensor elements SE(j) and being configured to generate for each sensor element SE(j) individually imaging data DAT(j) including an event signal SIG(j) from a group of event signal types in case a light flux onto the respective sensor element SE(j) changes by more than a given threshold THRES, and
- an evaluation system (120) configured to control the optics section (111) of the DVS camera (110) for variation of the focal length f(t) and configured to receive and evaluate the imaging data DAT(j) for determination of the position,
wherein the evaluation system (120) is configured to execute a method according to any one of claims 1 to 14.

## Patentansprüche

1. Verfahren SCMETH für ein auf einer Kamera (110) basierendes Ermitteln einer Position eines Merkmals (201) eines Objekts (200) in Bezug auf eine Referenzposition (111p) der Kamera (110), wobei das Objekt (200) in einem Sichtfeld FOV der Kamera (110) positioniert ist, das sich von der Kamera (110) aus in z-Richtung erstreckt,
wobei es sich bei der Kamera um eine DVS-Kamera (110) handelt,
-- die einen Sensorchip (111) mit mehreren Sensorelementen SE(j) umfasst und
-- so konfiguriert ist, dass sie für jedes Sensorelement SE(j) einzeln Bilddaten DAT(j) erzeugt, zu denen ein Ereignissignal SIG(j) aus einer Gruppe GRP Ereignissignaltypen gehört, falls sich ein auf das jeweilige Sensorelement SE(j) einfallender Lichtfluss FX um mehr als einen vorgegebenen Grenzwert THRES ändert, und
- wobei das Verfahren Folgendes umfasst:
-- eine Scanphase SCAN, wobei eine Brennweite f(t) eines Optikabschnitts (111) der DVS-Kamera (110) einem bestimmten zeitlichen Muster f(t) entsprechend geändert wird, und
-- eine Beurteilungsphase EVAL, wobei ein oder mehrere beliebige Bilddaten DAT(j), die bei der Brennweitenänderung in der Phase SCAN von der DVS-Kamera (110) erzeugt werden, beurteilt werden und so zumindest eine z-Position d201 des Merkmals (201) in z-Richtung ermittelt wird.

2. Verfahren nach Anspruch 1, wobei jedes Bilddatenelement DAT(j) Folgendes aufweist:
- das erzeugte Ereignissignal SIG(j) selbst,
- einen Zeitstempel TS(j), der den Zeitpunkt t repräsentiert, zu dem das Sensorelement SE(j) das jeweilige Ereignissignal SIG(j) erzeugt hat, und
- eine Kennung ID(j) des jeweiligen einzelnen das Ereignissignal SIG(j) erzeugenden Sensorelements SE(j).

3. Verfahren nach einem der Ansprüche 1 bis 2, wobei die für das Merkmal (201) zu ermittelnde z-Position d201 auf der Grundlage der aktuellen Brennweite f(t0) entsprechend einem Zeitpunkt t0 ermittelt wird, der so gewählt ist, dass er einen Zeitpunkt während der Änderung der Brennweite f(t) repräsentiert, zu dem ein zeitliches und/oder ein räumliches Muster eines oder mehrerer Ereignissignale SIG(j) erzeugender Sensorelemente SE(j) eine bestimmte Bedingung erfüllt.

4. Verfahren nach Anspruch 3, wobei davon ausgegangen wird, dass die bestimmte Bedingung erfüllt ist, falls zu einem Zeitpunkt tp ein Ereignissignal SIG(j) erzeugt wird, wobei t0 so gewählt ist, dass er dem Zeitpunkt tp entspricht.

5. Verfahren nach einem der Ansprüche 3 bis 4, wobei davon ausgegangen wird, dass die bestimmte Bedingung erfüllt ist, wenn
- für ein erstes Sensorelement SE(j) zwischen den Zeitpunkten t1 und t2, wobei t2≥t1, eine erste Abfolge SEQ(j) erzeugt wird, die ein oder mehrere Ereignissignale SIG(j) von einem ersten Ereignissignaltyp umfasst, und
- für ein Sensorelement SE(j'), das in einer eindeutigen Beziehung zu dem ersten Sensorelement SE(j) steht, zwischen den Zeitpunkten t3 und t4, wobei t4≥t3 und t3>t2, eine zweite Abfolge SEQ(j') erzeugt wird, die ein oder mehrere Ereignissignale SIG(j') von einem zweiten Ereignissignaltyp umfasst,
wobei t0 so gewählt ist, dass er im Bereich t2<t0<t3 liegt und insbesondere t0=(t2+t3)/2 gilt.

6. Verfahren nach Anspruch 5, wobei die Sensorelemente SE(j), SE(j') in einer eindeutigen Beziehung zueinander stehen, wenn sich beide Sensorelemente innerhalb eines bestimmten Abstands DIST zueinander auf dem Sensorchip befinden, wobei der bestimmte Abstand DIST auf der Grundlage der Änderungsgeschwindigkeit der Brennweite f(t) bei der Brennweitenänderung ermittelt wird.

7. Verfahren nach einem der Ansprüche 3 bis 6, wobei davon ausgegangen wird, dass die bestimmte Bedingung in dem Fall erfüllt ist, wenn
- für ein oder mehrere Sensorelemente SE innerhalb eines ersten Bereichs auf dem Sensorchip zwischen den Zeitpunkten t1 und t2, wobei t2≥t1, erste Ereignissignale SIG(j) von einem ersten Ereignissignaltyp erzeugt werden und
- für ein oder mehrere Sensorelemente SE innerhalb eines zweiten Bereichs auf dem Sensorchip, der in einer eindeutigen Beziehung zu dem ersten Bereich steht, zwischen den Zeitpunkten t3 und t4, wobei t4≥t3 und t3>t2, zweite Ereignissignale SIG(j') von einem zweiten Ereignissignaltyp erzeugt werden,
wobei t0 so gewählt ist, dass er im Bereich t2<t0<t3 liegt und insbesondere t0=(t2+t3)/2 gilt.

8. Verfahren nach Anspruch 7, wobei der erste und der zweite Bereich in einer eindeutigen Beziehung zueinander stehen, falls sie sich überlappen oder nebeneinanderliegen.

9. Verfahren nach einem der Ansprüche 3 bis 8, wobei ermittelt wird, dass die z-Position des Merkmals (201) der Abstand des aktuellen Brennpunkts des Optikabschnitts (112) zu einer Oberfläche (111p) des Sensorchips (111) zum ermittelten Zeitpunkt t0 ist, wobei der aktuelle Abstand des Brennpunkts von der aktuellen Brennweite f(t0) entsprechend dem gewählten Zeitpunkt t0 abgeleitet wird.

10. Verfahren nach einem der Ansprüche 1 bis 9, wobei der Optikabschnitt (112) die Änderung der Brennweite f(t) dem bestimmten zeitlichen Muster f(t) entsprechend durchführt, so dass
- sich seine Brennweite f(t) ändert und
- sich seine Fokusposition aufgrund der Änderung der Brennweite f(t) in z-Richtung verschiebt.

11. Verfahren nach einem der Ansprüche 1 bis 9, wobei der Optikabschnitt (112) die Änderung der Brennweite f(t) dem bestimmten zeitlichen Muster f(t) entsprechend durchführt, so dass
- sich seine Brennweite f(t) ändert und
- seine Fokusposition in z-Richtung in einer gleichen gewählten Position bleibt.

12. Verfahren nach Anspruch 11, wobei die SCAN-Phase mehrmals durchgeführt wird, wobei bei verschiedenen Durchführungen der SCAN-Phase verschiedene gleiche Fokuspositionen in z-Richtung gewählt werden.

13. Verfahren nach einem der Ansprüche 11 bis 12, wobei bei jeder Durchführung der SCAN-Phase im Lauf der Zeit t Positionen POS(j,t) jener Sensorelemente SE(j) auf dem Sensorchip (111) beobachtet werden, die bei einer Änderung der Brennweite f(t), welche einer Projektion (P201) des Merkmals (201) auf den Sensorchip (111) entspricht, Ereignissignale SIG(j) erzeugen und so eine durch die Änderung der Brennweite f(t) bedingte laterale Ausbreitungsgeschwindigkeit VEL(POS(j,t),t) der Projektion (P201) des Merkmals (201) auf dem Sensorchip (111) ermittelt wird, wobei eine Repräsentation der für das Merkmal (201) zu ermittelnden z-Position d201 auf der Grundlage der lateralen Ausbreitungsgeschwindigkeit VEL(POS(j,t),t) geschätzt wird.

14. Verfahren nach einem der Ansprüche 1 bis 13, wobei eine laterale Position x201, y201 des Merkmals 201 in x- und y-Richtung von der Position POS(j) des das Ereignissignal SIG(j) erzeugenden Sensorelements SE(j) auf dem Sensorchip (111) abgeleitet wird, wobei die Position POS(j) von der Kennung ID(j) des jeweiligen einzelnen das Ereignissignal SIG(j) erzeugenden Sensorelement SE(j) abgeleitet wird.

15. Scansystem (100) für ein auf einer Kamera basierendes Ermitteln einer Position eines Merkmals (201) eines Objekts (200) in Bezug auf eine Referenzposition (111p) der Kamera, wobei sich ein Sichtfeld FOV der Kamera (110) zum Scannen des Objekts (200) von der Kamera (110) aus in z-Richtung erstreckt, mit Folgendem:
- einer DVS-Kamera (110), die einen Sensorchip (111) mit mehreren Sensorelementen SE(j) umfasst und so konfiguriert ist, dass sie für jedes Sensorelement SE(j) einzeln Bilddaten DAT(j) erzeugt, zu denen ein Ereignissignal SIG(j) aus einer Gruppe Ereignissignaltypen gehört, falls sich ein auf das jeweilige Sensorelement SE(j) einfallender Lichtfluss um mehr als einen vorgegebenen Grenzwert THRES ändert, und
- einem Beurteilungssystem (120), das so konfiguriert ist, dass es den Optikabschnitt (111) der DVS-Kamera (110) auf eine Änderung der Brennweite f(t) hin überprüft und die Bilddaten DAT(j) zum Ermitteln der Position empfängt und beurteilt, wobei das Beurteilungssystem (120) so konfiguriert ist, dass es ein Verfahren nach einem der Ansprüche 1 bis 14 durchführt.

## Revendications

1. Procédé SCMETH pour la détermination basée sur une caméra (110) d'une position d'une caractéristique (201) d'un objet (200) par rapport à une position de référence (111p) de la caméra (110), dans lequel l'objet (200) est positionné dans un champ de vision FOV de la caméra (110) qui s'étend à partir de la caméra (110) dans une direction z,
dans lequel la caméra est une caméra DVS (110)
-- comprenant une puce de capteur (111) avec une pluralité d'éléments de capteur SE(j), et
-- étant configurée pour générer pour chaque élément de capteur SE(j) des données d'imagerie individuelles DAT(j) incluant un signal d'événement SIG(j) à partir d'un groupe GRP de types de signaux d'événement dans le cas où un flux lumineux FX sur l'élément de capteur SE(j) respectif change de plus d'un seuil THRES donné, et
- dans lequel le procédé comprend
-- une étape SCAN de balayage, dans laquelle une longueur focale f(t) d'une section optique (111) de la caméra DVS (110) est variée selon un modèle prédéfini f(t) dans le temps, et
-- une étape EVAL d'évaluation, dans laquelle une ou plusieurs données d'imagerie DAT(j) générées par la caméra DVS (110) pendant la variation de longueur focale de l'étape SCAN sont évaluées pour déterminer au moins une position z d201 de la caractéristique (201) dans la direction z.

2. Procédé selon la revendication 1, dans lequel chaque donnée d'imagerie DAT(j) inclut
- le signal d'événement généré SIG(j) lui-même,
- un horodatage TS (j) qui représente le moment t auquel l'élément de capteur SE(j) a généré le signal d'événement respectif SIG(j), et
- un identifiant ID(j) du signal d'événement individuel respectif SIG(j) générant l'élément de capteur SE(j).

3. Procédé selon l'une quelconque des revendications 1 à 2, dans lequel la position z d201 à déterminer pour la caractéristique (201) est déterminée sur la base de la longueur focale momentanée f(t0) selon un point t0 dans le temps qui est sélectionné pour représenter un moment dans le temps pendant la variation de la longueur focale f(t) auquel un motif temporel et/ou spatial d'un ou plusieurs éléments de capteur SE(j) générant des signaux d'événement SIG(j) remplit une condition prédéfinie.

4. Procédé selon la revendication 3, dans lequel la condition prédéfinie est supposée être remplie dans le cas où un signal d'événement SIG (j) est généré à un point tp dans le temps, dans lequel t0 est sélectionné pour être identique au point tp dans le temps.

5. Procédé selon l'une quelconque des revendications 3 à 4, dans lequel la condition prédéfinie est supposée être remplie dans le cas où,
- pour un premier élément de capteur SE(j), une première séquence SEQ(j) comprenant un ou plusieurs signaux d'événement SIG(j) d'un premier type de signal d'événement est générée entre les points t1 et t2 dans le temps avec t2≥t1 et
- pour un élément de capteur SE(j') lié sans ambiguïté au premier élément de capteur SE(j), une deuxième séquence SEQ(j') comprenant un ou plusieurs signaux d'événement SIG(j') d'un deuxième type de signal d'événement est générée entre les points t3 et t4 dans le temps avec t4≥t3 et t3>t2,
dans lequel t0 est choisi pour être compris dans la plage t2<t0<t3, en particulier t0=(t2+t3)/2.

6. Procédé selon la revendication 5, dans lequel les éléments de capteurs SE(j), SE(j') sont liés sans ambiguïté les uns aux autres dans le cas où les deux éléments de capteurs sont situés sur la puce de capteur à une distance prédéfinie DIST l'un de l'autre, dans lequel la distance prédéfinie DIST est déterminée sur la base de la vitesse de changement de la longueur focale f(t) pendant la variation de la longueur focale.

7. Procédé selon l'une quelconque des revendications 3 à 6, dans lequel la condition prédéfinie est supposée être remplie dans le cas où,
- pour un ou plusieurs éléments de capteurs SE dans une première zone sur la puce de capteur, des premiers signaux d'événement SIG(j) d'un premier type de signal d'événement sont générés entre les points t1 et t2 dans le temps avec t2≥t1, et
- pour un ou plusieurs éléments de capteurs SE à l'intérieur d'une deuxième zone sur la puce de capteur liée sans ambiguïté à la première zone, des deuxièmes signaux d'événement SIG(j') d'un deuxième type de signal d'événement sont générés entre les points t3 et t4 dans le temps avec t4≥t3 et t3>t2,
dans lequel t0 est choisi pour être compris dans la plage t2<t0<t3, en particulier t0=(t2+t3)/2.

8. Procédé selon la revendication 7, dans lequel la première zone et la deuxième zone sont liées sans ambiguïté l'une à l'autre dans le cas où elles se chevauchent ou sont adjacentes l'une à l'autre.

9. Procédé selon l'une quelconque des revendications 3 à 8, dans lequel la position z de la caractéristique (201) est déterminée comme étant la distance du point focal momentané de la section optique (112) à partir d'une surface (111p) de la puce de capteur (111) au point t0 déterminé dans le temps, la distance momentanée du point focal étant dérivée de la longueur focale momentanée f(t0) en fonction du point t0 sélectionné dans le temps.

10. Procédé selon l'une quelconque des revendications 1 à 9, dans lequel la section optique (112) exécute la variation de la longueur focale f(t) selon le modèle prédéfini f(t) dans le temps de telle sorte que
- sa longueur focale f(t) est variée et
- sa position de mise au point se déplace dans la direction z en raison de la variation de la longueur focale f(t).

11. Procédé selon l'une quelconque des revendications 1 à 9, dans lequel la section optique (112) exécute la variation de la longueur focale f(t) selon le modèle prédéfini f(t) dans le temps de telle sorte que
- sa longueur focale f(t) est variée et
- sa position de mise au point reste constante à une position sélectionnée dans la direction z.

12. Procédé selon la revendication 11, dans lequel l'étape SCAN est exécutée plusieurs fois, dans lequel différentes positions de mise au point constantes dans la direction z sont sélectionnées pour différentes exécutions de l'étape SCAN.

13. Procédé selon l'une quelconque des revendications 11 à 12, dans lequel, pour chaque exécution de l'étape SCAN, les positions POS (j, t) des éléments de capteur SE (j) sur la puce de capteur (111) sont observées pendant le temps t, ce qui génère des signaux d'événement SIG (j) pendant la variation de la longueur focale f (t) correspondant à une projection (P201) de la caractéristique (201) sur la puce de capteur (111), pour déterminer une vitesse de propagation latérale VEL (POS (j, t), t) de la projection (P201) de la caractéristique (201) sur la puce de capteur (111) due à la variation de la longueur focale f(t), dans lequel une représentation de la position z d201 à déterminer pour la caractéristique (201) est estimée sur la base de la vitesse de propagation latérale VEL (POS (j, t), t).

14. Procédé selon l'une quelconque des revendications 1 à 13, dans lequel une position latérale x201, y201 de la caractéristique 201 dans les directions x et y est dérivée de la position POS (j) de l'élément de capteur SE(j) générant le signal d'événement SIG(j) sur la puce de capteur (111), la position POS (j) étant dérivée de l'identificateur ID (j) de l'élément de capteur SE(j) respectif générant le signal d'événement individuel SIG(j).

15. Système de balayage (100) pour la détermination basée sur une caméra d'une position d'une caractéristique (201) d'un objet (200) par rapport à une position de référence (111p) de la caméra, dans lequel un champ de vision FOV de la caméra (110) pour balayer l'objet (200) s'étend à partir de la caméra (110) dans une direction z, comprenant
- une caméra DVS (110) comprenant une puce de capteur (111) avec une pluralité d'éléments de capteur SE(j) et étant configurée pour générer pour chaque élément de capteur SE(j) des données d'imagerie individuelles DAT(j) incluant un signal d'événement SIG(j) à partir d'un groupe de types de signaux d'événement dans le cas où un flux lumineux sur l'élément de capteur SE(j) respectif change de plus d'un seuil THRES donné, et
- un système d'évaluation (120) configuré pour contrôler la section optique (111) de la caméra DVS (110) pour la variation de la longueur focale f(t) et configuré pour recevoir et évaluer les données d'imagerie DAT(j) pour la détermination de la position, dans lequel le système d'évaluation (120) est configuré pour exécuter un procédé selon l'une quelconque des revendications 1 à 14.
